# EUROPEAN PATENT SPECIFICATION

(11) **EP 2 200 814 B1**
(45) Date of publication and mention of the grant of the patent: **08.01.2014**
(21) Application number: 07802233.2
(22) Date of filing: 10.09.2007
(51) Int. Cl.: B29D 30/16

(54) **PROCESS AND APPARATUS FOR MANUFACTURING A REINFORCING STRUCTURE FOR TYRES OF VEHICLES**
VERFAHREN UND VORRICHTUNG ZUR HERSTELLUNG EINER VERSTÄRKUNGSSTRUKTUR FÜR FAHRZEUGREIFEN
TRAITEMENT ET APPAREIL POUR FABRIQUER UNE STRUCTURE DE RENFORT DE PNEUMATIQUES DE VÉHICULES

(43) Date of publication of application: 30.06.2010
(73) Proprietor: Pirelli Tyre S.P.A., 20126 Milano (IT)
(72) Inventor: MARCHINI, Maurizio, I-20126 Milano (IT); MARIANI, Fiorenzo, I-20046 Biassono (IT); MANDELLI, Walter, I-20126 Milano (IT); SANGIOVANNI, Stefano, I-20126 Milano (IT)
(74) Representative: Fabiano, Piero
(86) International application number: PCT/EP2007/007854
(87) International publication number: WO 2009/033493

(56) References cited:
- EP-A- 1 588 832
- EP-A- 1 595 693
- WO-A-03/045714
- WO-A-2007/054984
- US-A- 1 728 957

## Description

The present invention relates to a process for producing types on a toroidal support and to an apparatus for manufacturing a reinforcing structure for tyres of vehicles through application of strip-like elements in mutual side by side relationship along the circumferential extension of a toroidal support so as to form at least one reinforcing layer having a continuous circumferential extension around a geometric rotation axis.

Each of said strip-like elements comprises longitudinal reinforcing threadlike elements disposed parallel to each other and at least partly coated with at least one layer of elastomeric material.

In the present specification, the invention will be depicted with particular reference to manufacture of a belt structure of a tyre. It is however pointed out already now that the apparatus in accordance with the invention can be also used for manufacturing a carcass structure of the tyre or, more generally, any other reinforcing structure comprising cords oriented parallel to each other and according to a predetermined angle relative to an equatorial plane of the tyre itself.

A tyre for vehicle wheels usually comprises a carcass structure essentially made up of one or more carcass plies of a substantially toroidal shape and having their axially opposite side edges in engagement with respective annular reinforcing structures incorporating circular inserts usually referred to as "bead cores". Each annular reinforcing structure is incorporated into a so-called "bead" defined along an inner circumferential edge of the tyre for anchoring of the latter to a corresponding mounting rim.

Applied to the carcass structure, at a radially external position, is a belt structure comprising one or more belt layers in the form of an endless ring and essentially made up of textile or metallic cords suitably oriented with respect to each other and to the cords belonging to the adjacent carcass plies.

Also applied to the belt structure, at a radially external position, is a tread band usually consisting of a strip of elastomeric material of suitable thickness. It is to be pointed out that, to the aims of the present description, by the term "elastomeric material" it is intended a compound comprising at least one elastomeric polymer and at least one reinforcing filler. Preferably, this compound further comprises additives such as cross-linking agents and/or plasticizers, for example. Due to the presence of the cross-linking agents, this material can be cross-linked through heating, so as to form the final article of manufacture.

A pair of sidewalls is applied to the opposite sides of the tyre, each of them coating a side portion of the tyre included between a so-called shoulder region, located close to the corresponding side edge of the tread band, and the corresponding bead.

Recently, particular attention has been paid to the possibility of finding production methods enabling manufacture of intermediate semi-finished products to be eliminated or at least reduced, in the field of tyre building. For instance, in the European Patent Application EP09288680 in the name of the same Applicant, it is described a method of manufacturing tyres in which the carcass ply or plies, as well as each of the belt layers, are obtained by laying a plurality of strip-like elements one after the other in circumferential side by side relationship, on a toroidal support conforming in shape to the inner conformation of the tyre to be obtained.

In document US6355126, it is described a method and an apparatus for manufacturing a belt layer through laying of strip-like elements cut from a continuous ribbon-like element. Each strip-like element, once cut from the continuous ribbon-like element, is picked up by grip members of the magnetic type or provided with suction cups, controlled by one ore more robotized arms. The grip members retain the strip-like element at the opposite ends of same, and possibly at a central portion thereof, and are moved upon command of the robotized arms to cause application of the strip-like element itself onto the outer surface of a toroidal support, according to a predetermined angle relative to the circumferential extension of said support. When application has been completed, the toroidal support is rotated around its geometric axis according to a predetermined angle, to enable application of a new strip-like segment at a position adjacent to the previously applied one. Sequential repetition of the above described steps causes formation of a belt layer extending along the whole circumferential extension of the toroidal support.

In document WO01/38077, on which the preamble of independent claim 7 is based, in the name of the same Applicant it is described another method and apparatus for manufacturing a belt layer for vehicle tyres, through laying of strip-like elements cut from a continuous ribbon-like element. In detail, the strip-like segments thus cut are applied in mutual side by side relationship along the circumferential extension of a toroidal support to form at least one reinforcing layer having a continuous circumferential extension around a geometric rotation axis of the toroidal support. During this application, a relative angular rotation is determined between the strip-like segment itself and the toroidal support, around a correction axis substantially radial to the geometric rotation axis of the toroidal support.

In the technical field of the invention were also known documents US1728957; WO03/045714; EP1588832; EP1595693; and WO2007/054984 defining the general state of the art.

The Applicant has however perceived that laying of strip-like elements carried out following the teachings of the known art could determine unevenness in the reinforcing structure.

The Applicant has further noticed that in laying apparatus for strip-like elements of the known art it is not possible to maintain a contact between the element exerting a laying pressure and the supporting drum, over the whole width of the presser element along all the laying trajectory, above all with high-curvature outlines of the toroidal support, such as the toroidal supports used for motorcycle tyres for example.

In particular, the Applicant has noticed that in the laying apparatus according to application WO01/38077 it is difficult to carefully control laying of the ends of the strip-like element. This could involve a loss of accuracy in following the predetermined laying trajectory and an insufficient adhesion of the end tips of the strip-like element. This lack of contact may cause, in this case too, an insufficient adhesion of the strip-like element, above all at the ends thereof.

The Applicant has now found that it is possible to ensure a high structural evenness in a reinforcing structure obtained by sequential laying of strip-like elements, by exercising a pressure in a substantially continuous fashion on the strip like element to be laid down along a tilted direction with respect to the longitudinal direction of the reinforcing element of the strip like element along all the laying trajectory.

In a first aspect, the invention relates to a process for producing tyres on a toroidal support, which tyres comprise a reinforcing structure comprising at least one layer having a continuous circumferential extension around the geometric rotation axis of a toroidal support comprising an outer surface; the at least one layer being formed of a plurality of strip-like elements distributed in mutual side by side relationship along the circumferential extension of said toroidal support according to a predetermined laying angle (α) relative to a circumferential extension direction of the toroidal support itself; each strip-like element comprising thread-like reinforcing elements at least partly coated with at least one layer of elastomeric material and been disposed parallel to each other and to a longitudinal direction of the same strip-like element;
the process comprising:
a) providing at least one strip-like element to be laid down on the toroidal support;
b) radially moving said strip-like element towards the toroidal support until it comes into contact with the outer surface of said toroidal support enabling it to be pressed at its central portion close to the equatorial plane of said toroidal support;
c) exercising a pressure in a substantially continuous fashion over the whole width of the strip-like element along a tilted direction with respect to the longitudinal direction of the thread-like reinforcing element of the strip-like element;
d) pressing said strip-like element in opposite direction starting from the equatorial plane along the tilted direction substantially along all its longitudinal extension;
e) angularly rotating said toroidal support around a geometric axis (X-X) thereof according to a predetermined angular pitch, to make it ready for application of a new strip-like element;
f) sequentially repeating steps a) to e) to obtain the reinforcing structure.

Preferably, the tilted direction is the direction defined by the laying angle (α) relative to a circumferential extension direction of the toroidal support.

Preferably, the process further comprises bringing two first presser elements in coupling relationship with two respective support element to form two laying assemblies so as to retain a strip-like element.

Preferably , the strip-like elements are obtained by means of cutting actions sequentially executed on at least a continuous strip-like element incorporating said thread-like reinforcing elements in said layer of elastomeric material.

According to a second aspect of the present invention relates to an apparatus for manufacturing a reinforcing structure for tyres of vehicles, the reinforcing structure comprising at least one layer to be formed by strip-like elements, each comprising thread-like reinforcing elements disposed parallel to each other and at least partly coated with at least one layer of elastomeric material, the apparatus comprising:
- a laying unit comprising at least one laying assembly designed to apply each of said strip-like elements onto a toroidal support, according to a predetermined laying angle (α) relative to a circumferential extension direction of the toroidal support itself;
- said laying assembly comprising at least one first presser element, movable in contrast relationship against the outer surface of the toroidal support wherein:
   said first presser element comprises at least one tapered end adapted to perform said contrast relationship and forming a tilted side according to a tilt angle (β) correspondent to said predetermined laying angle (α) of the strip-like elements.

Particular embodiments of the invention are the subject of the respective dependent claims.

It is pointed out that providing a tilted side such as the above described facilitates the presser element contrast against the outer surface of the toroidal support over the whole width of the strip-like element and along all its longitudinal extension.

Preferably, the tapered end of the first presser element is asymmetrically tapered.

It is also conveniently provided that the first presser element is elastically flexible to follow the outer surface of the toroidal support during the laying down of the strip-like elements.

It is pointed out that providing a first presser element elastically flexible allow its tapered end to maintain better the contact with the outer surface of the toroidal support, above all with high-curvature outlines of the toroidal supports used for motorcycle tyres.

Preferably, each laying assembly comprises at least one support element designed to be coupled with the first presser element in such a way to form a passage for the strip-like element to be laid down.

Preferably, the at least one laying assembly comprises at least one guide element to guide the strip like element in a longitudinal direction thereof during the laying down.

Further advantages of the present invention will become more apparent from the detailed description of a preferred but not exclusive example of an apparatus for manufacturing a reinforcing structure for tyres of vehicles according to the present invention. This description will be set out hereinafter with reference to the accompanying drawings, given by way of non-limiting example, in which:
- Fig. 1 diagrammatically shows an apparatus according to the invention in an operating step during which a strip-like element is about to be laid onto a toroidal support;
- Fig. 1a diagrammatically shows an enlarged view of the laying assembly according to the invention;
- Fig. 2 is a diagrammatic partially view of a laying assembly according to the example of figure 1, in open condition;
- Fig. 3 diagrammatically shows a second example of an apparatus according to the invention in an operating step during which a strip-like element is about to be laid onto a toroidal support;
- Fig. 4 is a diagrammatic partially - view of a laying assembly according to the example of figure 3, in open condition;
- Fig. 5 diagrammatically shows the apparatus seen in Fig. 1, in which one end of a continuous ribbon-like element is about to be grasped by a grip element;
- Fig. 6 shows a step subsequent to Fig. 5, in which the ribbon-like element has been stretched out next to the toroidal support and engaged by the laying unit;
- Fig. 7 shows a step subsequent to Fig. 6, in which the strip-like element is about to be applied onto the toroidal support, at a central portion thereof,;
- Fig. 8 shows the strip-like element at the end of the application on the toroidal support; and
- Fig. 9 is a partial sectional view of a tyre obtainable with the process according the present invention.

With reference to the drawings, an apparatus for manufacturing reinforcing structures for tyres of vehicles in accordance with the present invention has been generally denoted by 1.

In the example described, apparatus 1 lends itself to manufacture a belt structure on a toroidal support 3 having an outer surface 3a substantially conforming in shape to the inner configuration of the tyre to be obtained.

Preferably, before carrying out manufacture of the belt structure, a carcass structure (not shown in the drawings) is applied; said carcass structure can be conveniently formed on the same toroidal support 3 following the description disclosed in anyone of the following patents or patent applications, EP0943421, EP0928680, EP98830661.0, EP98830472.1, all in the name of the same Applicant.

The toroidal support 3, not described in detail because it can be manufactured in any convenient manner by a person skilled in the art, can for example consist of a dismountable or collapsible metal drum to facilitate subsequent removal of same from the obtained tyre. However, the belt structure can also be directly manufactured on the carcass structure, suitably stiffened by inflation for example, in this case said carcass structure also performing the function of a toroidal support. It is also to be pointed out that, in case of need, apparatus 1 is adapted to be also used to manufacture the carcass structure itself, or any other reinforcing structure of the tyre.

For the aim of the present description and of the claims which follow, the "toroidal support" may also be intended as comprehensive of the carcass structure and of others eventual reinforcing layers placed below the carcass structure.

Apparatus 1 comprises at least one feeding unit 3 provided to supply strip-like elements 5 of predetermined length. Said strip-like elements can be obtained by cutting operations sequentially carried out on at least one continuous ribbon-like element 6 coming from a drawing and/or calendering device, or from a feeding reel not shown in the figures. The continuous ribbon-like element 6, and consequently the strip-like elements 5 obtained therefrom, each have a plurality of thread-like elements and/or cords preferably of textile material, extending parallel to each other along the longitudinal extension of the ribbon-like element and the strip-like element itself, and at least partly coated with a layer of elastomeric material applied through a drawing and/or calendering operation.

The feeding unit is of known type such as that described in patent application WO01/3807 for example, in the name of the same Applicant, and comprises at least one cutting member 7 designed to cut the continuous ribbon-like element 6 according to a predetermined inclination relative to the longitudinal extension of same, to obtain each individual strip-like element 5.

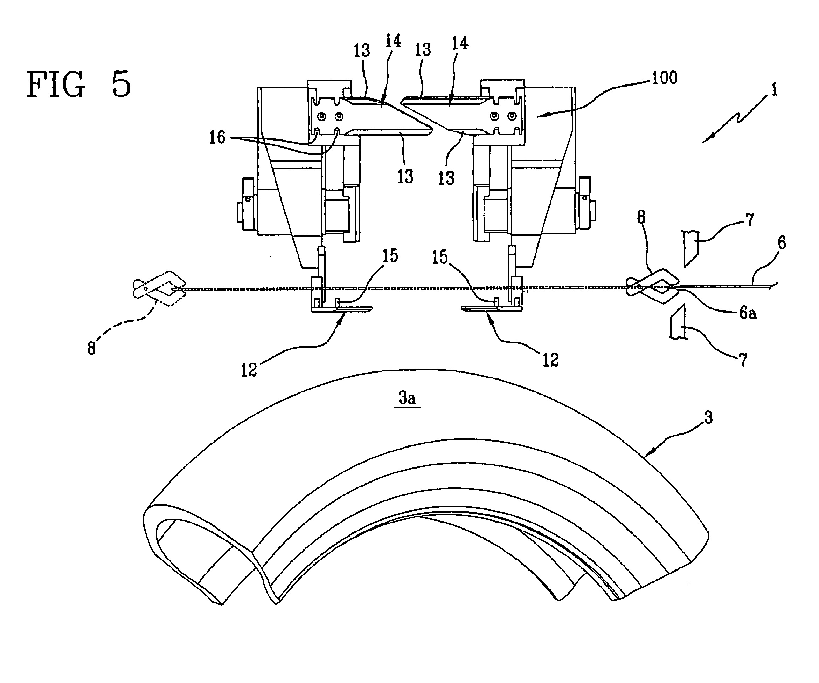

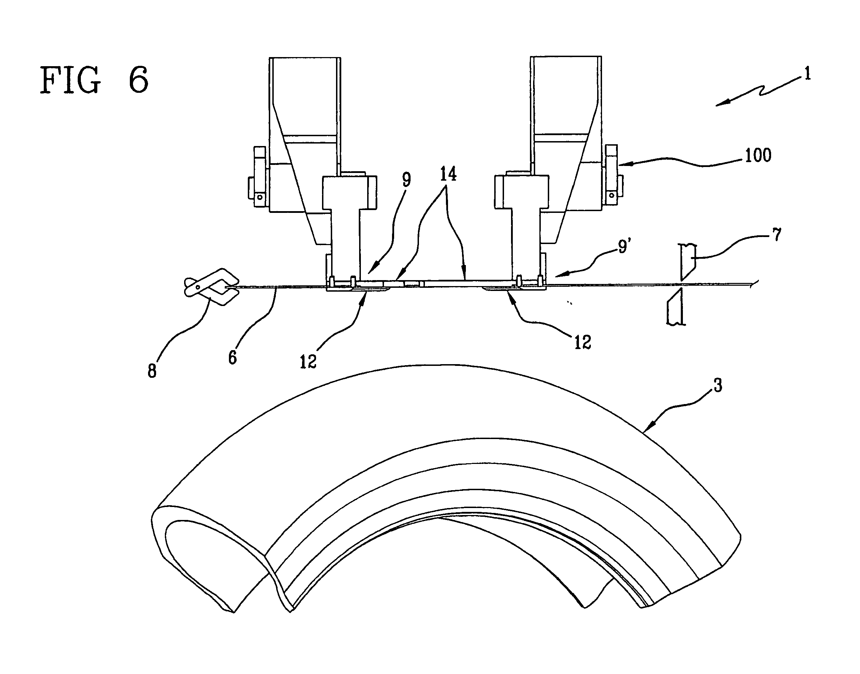

Combined with the cutting member 7 is at least one grip member 8 movable between a first work position at which, as shown in Fig. 5, it lends itself to engage a final end 6a of the continuous ribbon-like element 6 close to the cutting member 7, and a second work position at which it is spaced apart from the cutting member itself. As shown in Fig. 6, following translation from the first to the second work positions, the grip member 8 drives the continuous ribbon-like element 6 so as to stretch it out beyond the cutting member 7 and preferably at a radially approached position relative to the toroidal support 3, over a length corresponding to that of the strip-like element 5 to be obtained following subsequent operation of the cutting member itself.

Apparatus 1 further comprises at least one laying unit 100 preferably provided with two laying assemblies 9, 9', operating on the continuous ribbon-like element 6 in a region immediately downstream of the cutting member 7.

The laying assemblies 9, 9' lend themselves to engage each of the strip-like elements 5 sequentially coming out of the feeding unit 4. The two laying assemblies 9, 9' operatively cause application of said strip-like elements 5 onto the outer surface 3a of the toroidal support 3, or onto the carcass structure formed thereon, according to a predetermined laying angle α relative to a circumferential extension direction of the toroidal support itself.

Preferably, the laying angle α is the angle relative to a circumferential extension direction of the toroidal support 3 itself.

The laying angle α is comprised between 12° and 45°. Preferably, the laying angle α is comprised between 14° and 30°.

It is pointed out that due to the curvature of the toroidal support 3 the laying angle α at the crown portion of the toroidal support may differ with respect to the laying angle α at the shoulder region of the toroidal support 3.

The shoulder region of the toroidal support 3 corresponds to the shoulder region of the finished tyre.

The laying angle α can be easily pre-set either by suitably orienting the laying unit 100 and possibly the feeding unit 4 relative to the toroidal support, or by suitably orienting said toroidal support relative to the laying and feeding units.

To apply the strip-like elements 5 onto the outer surface 3a of the toroidal support 3, each laying assembly 9, 9' comprises at least one first presser element 14 movable along the strip-like element 5, in contrast relationship against the outer surface 3a of the toroidal support 3 to cause application of the strip-like element 5.

The first presser element 14 is represented by substantially rectangular section thin bar having a prevalent size L defining a longitudinal direction Z-Z', and two base sizes, major N and minor M base size.

Both the base sizes N,M are perpendicular to the prevalent size L. The major size N defines a transversal direction while the minor size M is coincident with the thickness of the bar.

The bar has a first end connected to a first support arm 28 and a tapered end 31, opposite to the first, designed to perform the above contrast relationship against the outer surface 3a of the toroidal support 3.

The tapered end 31 of the first presser element 14 is tapered so as to form a tilted side 32 according to a tilt angle (β) equal to the predetermined laying angle (α) of the strip-like elements 5 at the shoulder region of the toroidal support.

The tilt angle (β) is the angle enclosed between the longitudinal direction of the first presser element 14 and the direction of the tilted side 32.

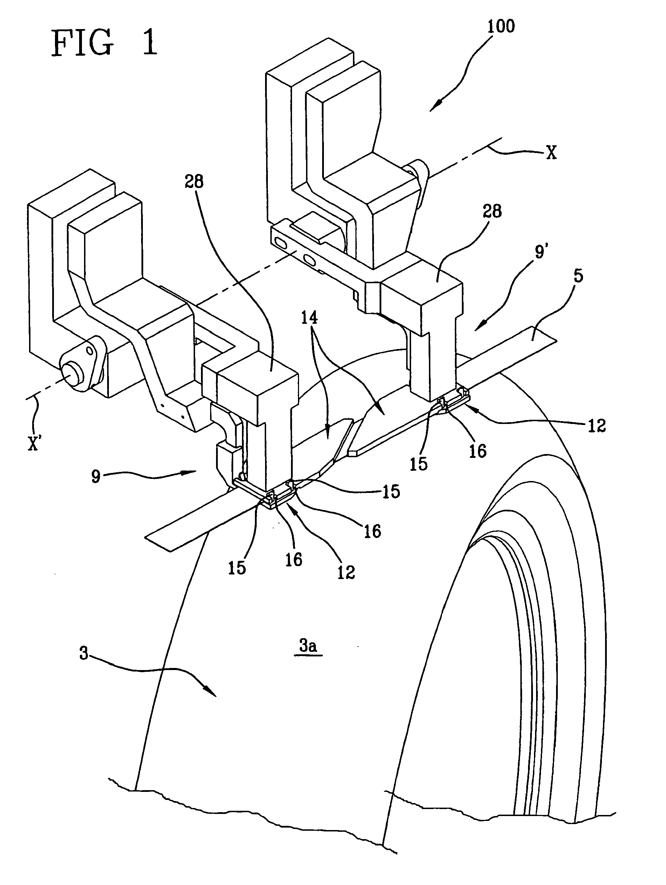

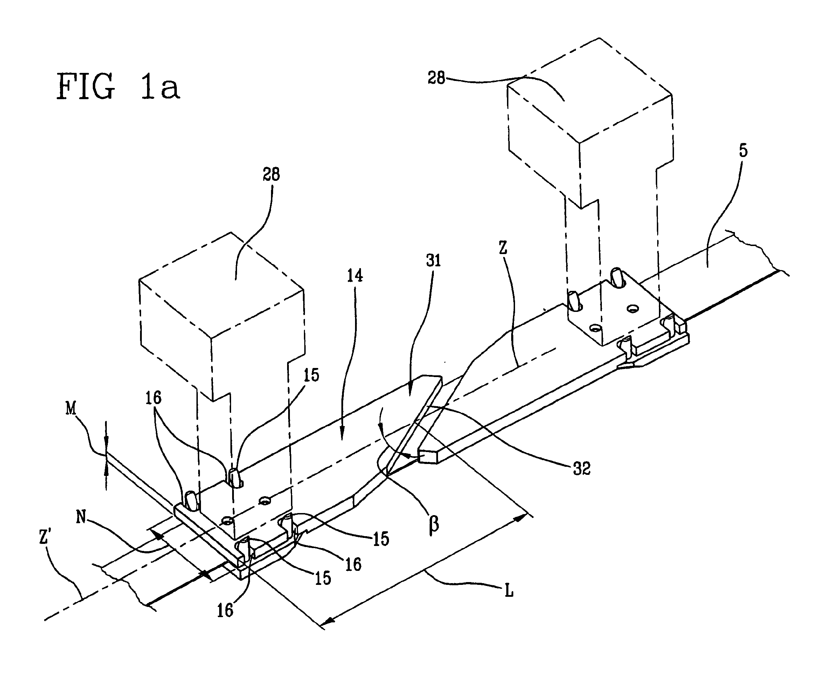

Advantageously, as shown in figure 1a, the shaped end of the first presser element 14 is asymmetrically tapered with respect to the longitudinal direction Z-Z' of the first presser element 14.

In order to better follow the external surface of the toroidal support 3a in every instant of the laying down phase of the strips like elements 5 and along all its longitudinal extension, the first presser element 14 is elastically flexible.

For this aim, the first presser element 14 is formed by a material comprising at least one thermoplastic halogenated polymer. Preferably, the at least one halogenated polymer is polyvinylchloride (PVC) or perflorurated polymer, such as Teflon^{®}, or a mixture thereof.

Alternatively, for the same aim, the first presser element 14 is made of spring steel.

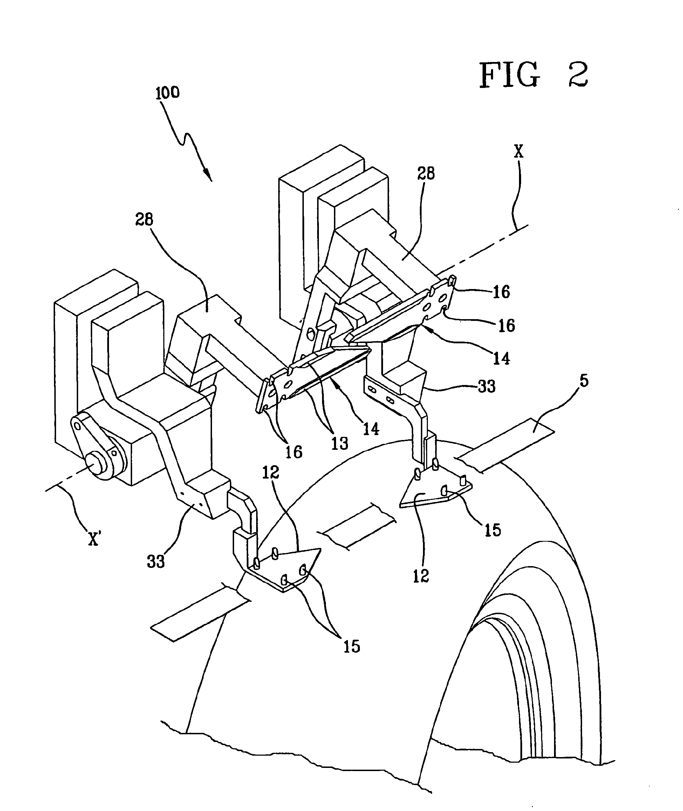

In a first example, shown in the figures 1,2, each laying assembly 9,9' comprises at least one support element 12 carried by a second arm 33. The support element 12 is designed to be coupled with the first presser element 14 in such a way to form a passage for the strip-like element 5 to be laid down.

For this purpose, each laying assembly 9,9' comprises at least an engaging device. The example of fig. 1 shows , as engaging device, for each laying assembly 9,9' four prongs 15 protruding upwardly from the support element 12.

The four prongs 15 are arranged in couple of two, each prong 15 of the same couple been placed in series to the other in the longitudinal direction of the first presser element 14.

The two couples of prongs 15 are spaced apart transversally at distance slightly greater than the transversal size of the strip like element 5 to be laying down in such a way to define an internal path for the strip like element 5 to be laid down.
All prongs 15 are tapered upwardly in order to center the strip like elements 5 in the internal path during the coupling of the first presser element 14 with the support element 12.
The prongs 15 are designed to be coupled in a removable manner with correspondent seats 16 realised on the first presser element 14.

In a further example, not shown in figures, the prongs 15 may protrude downwardly from the first presser element. In that case, the prongs 15 engage correspondent seats realised in the support element 12.

Advantageously, as shown in the figures 1,1a,2, each presser element 14 comprises at least one guide element 13 to guide the strip like element during the laid down. In particular, as guide element 13 two lateral shoulder protruding from each first presser element 14 are provided.
The two lateral shoulder are reciprocally transversally spaced apart of a distance greater than the transversal size of the strip like element to be laid down along the entire length of the first presser element 14.

Each first presser element 14 is carried by a support arm 28 having a substantially L-shaped conformation and movable along the X-X' axis of a guide structure upon the action of transverse-movement devices.

It is further to be noticed that the supporting arms 28 can rotate relative to an end thereof, as shown in figure 2. In fact, to promote translation of the grip member 8 between the first and second operating positions in the absence of mechanical interferences and to facilitate engagement between the strip-like element 5 coming out of the feeding device 4 and each laying assembly 9, 9', the supporting arms 28 can angularly rotate about a longitudinal extension axis X-X' passing through an end thereof.

Angular rotation of arms 28 causes rotation of the respective presser elements 14 between a rest position at which, as shown in Fig. 2, they are moved apart from a longitudinal movement trajectory imposed to the continuous ribbon-like element 6 by the grip member 8, and a work position at which, as shown in Fig. 1, they are disposed on said movement trajectory and act in coupling relationship with the support element 12 and the continuous ribbon-like element 6 interposed therebetween.

Also associated with the laying unit 100, are radial-movement devices designed to cause translation of each laying assembly 9, 9', once coupling between first presser elements 14, and support elements 12 has occurred, radially close to or away from the outer surface 3a of the toroidal support 3.

These radial-movement devices are not shown or described in detail because they can be made in any manner convenient for a person skilled in the art.

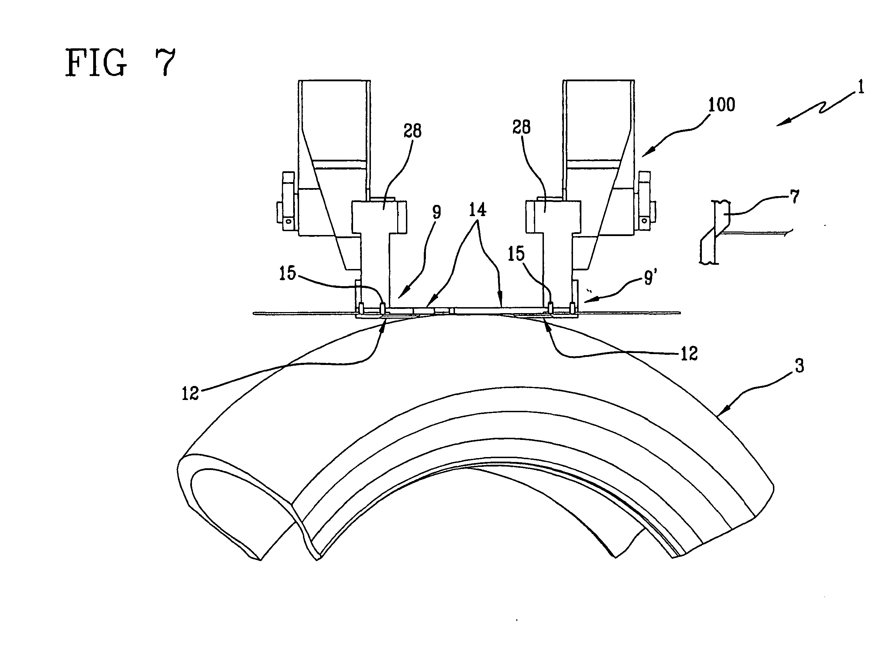

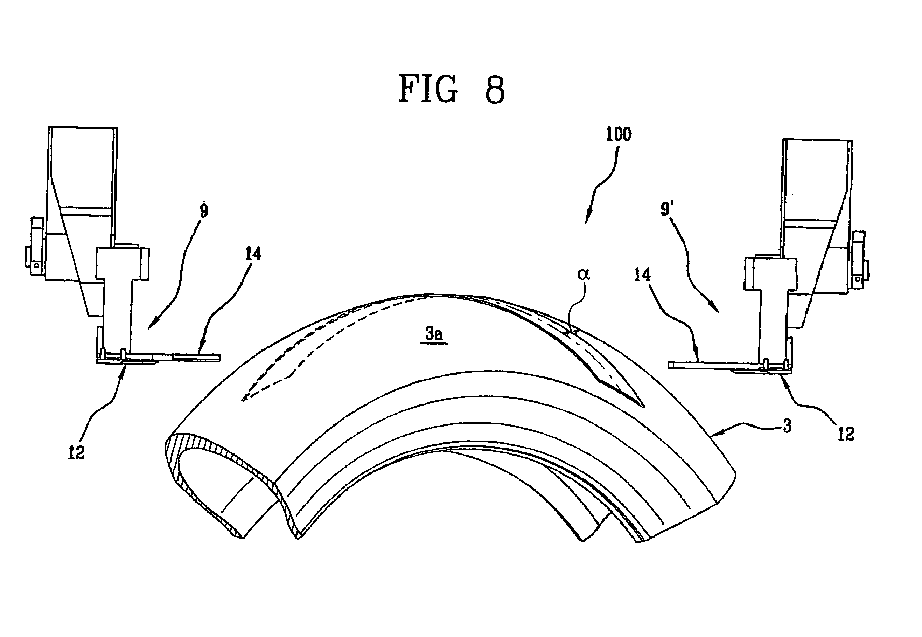

Also provided are transverse-movement devices, not shown too as they can be made in any convenient manner, and which operate on arms 28 or arms 33 for example, to cause translation along X-X' axis of each laying assembly 9, 9', once the above mentioned coupling has occurred, between a first operating condition at which, as shown in Fig.7, they are disposed close to each other and a second operating condition at which, as shown in Fig.8, they are spaced apart from an equatorial plane of the toroidal support 3.

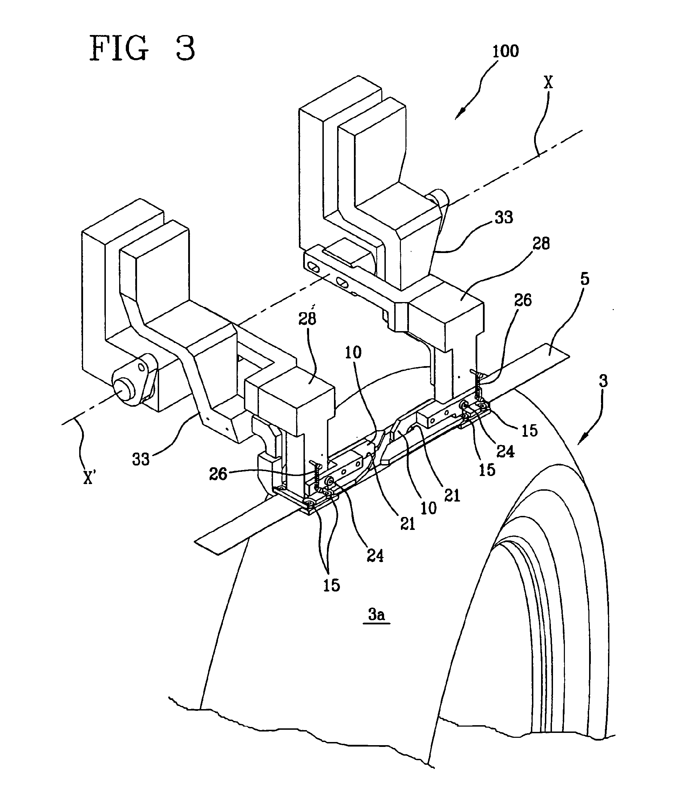

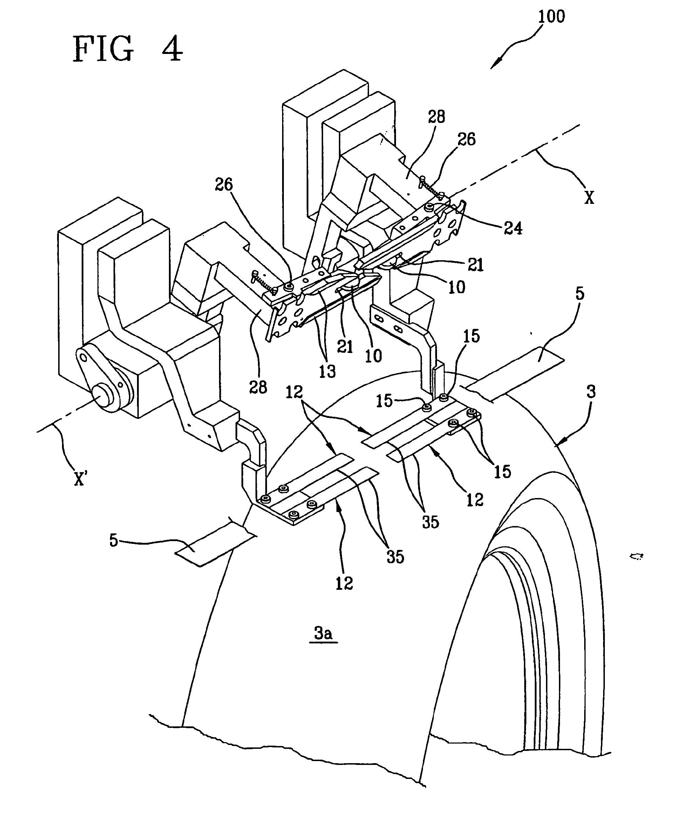

Figures 3 and 4 shown a second embodiment of the present invention. In that case, each laying assembly 9, 9' further comprises at least one second presser element 10 to push said strip-like element 5 on the outer surface 3a of said toroidal support 3 at the equatorial plane at least during the first instants of the laying down.

In particular, in each laying assembly 9,9,' the second presser element 10 has the task of forcing the strip-like element 5, at the central region thereof, against the toroidal support 3. In that way, preventing the strip-like element itself from folding upon itself, during the first instants of the laying down process.

For this aim, each first presser element 14 comprises at the tapered end 31 a slot 21 in which the end of the second presser element is located.
The end of the second presser element 10 performing the task of forcing the strip-like element 5 protrudes under the first presser element 14.

As shown in figures 3 and 4, each laying assembly 9,9' comprises at least one spring element 26.

In more detail, each second presser element 10 is pivotally mounted on the first support arm 28, at 24, and are operationally connected to the spring element 26, in turn connected to the first support arm 28.

Preferably, the spring element 26 is a helical spring.

The spring element 26 is connected to an end of the second presser element 10 and acts so as to maintain the opposite end of same in contrast relationship with the outer surface 3a of the toroidal support 3.

According to this example, shown in figure 4, the support element 12 of each laying assembly 9,9' may be represented by two wings 35 reciprocally spaced apart of such a distance to allow the end of the second presser element protruding from the slot 21 to contact the strip-like element 5.

Preferably, as shown in the figure 4, the wings are substantially long as the first presser element 14, but could be shorter without departing from the scope of the present invention.

Preparation and laying of each strip-like element 5 using the examples according to the present invention substantially takes place following the steps briefly described hereinafter.

Starting from the condition shown in Fig. 5, the grip member 8 is brought to the first work position to engage the final end 6a of the continuous ribbon-like element 6 close to the cutting member 7 (Fig. 5). When the grip member 8 reaches the second work position, angular rotation of the supporting arms 28 is caused, so as to bring the presser elements 14, 10 in engagement relationship with the continuous ribbon-like element 6 driven by the grip member itself, and with the respective support elements 12 under it. In other words, the presser elements 14, 10 are brought into coupling relationship with the respective support elements 12.

Then operation of the cutting member 7 is actuated for carrying out cutting of the strip-like element 5. Under this circumstance, the support element 12 co-operates with the first presser element 14 to retain the strip-like element 5, transversely stretched out in a substantially centred position relative to the equatorial plane of the toroidal support 3.

In other words the center of the strip-like element 5 is substantially located at the equatorial plane of the toroidal support 3.

Also determined is translation of the laying assemblies 9, 9' towards the toroidal support 3 so that the strip-like element 5 is radially moved close to the toroidal support 3, brought into contact with and pressed, at its central portion, against the outer surface 3a, in the vicinity of the equatorial plane of the toroidal support itself.

By mutual moving apart of the laying assemblies 9, 9', simultaneous translation of the first 14 presser elements is determined along the strip-like segment 5, away from the equatorial plane, so as to determine application of the strip-like element 5 onto the toroidal support 3, over the whole length thereof. During the translation of the first presser elements 14 a pressing action progressively extending towards the opposite ends of the strip-like element itself, starting from the central portion of the latter is pertained.

The pressing action is performed in a substantially continuous fashion over all the width of the strip like element along a tilted direction.

The tilted direction is measured with respect to the longitudinal direction of the reinforcing element of the strip like element.

The tilted direction is the direction defined by the laying angle α at the shoulder region of the toroidal support 3 relative to a circumferential extension direction of the toroidal support 3.

The above pressing action is performed by the tilted side 32 of the first presser element.

The laying angle α is the angle that should be have the threadlike reinforcing elements of strip-like elements 5 itself at the shoulder region of the finished tyre.

Subsequently, an angular rotation of the toroidal support 3 is caused around its geometric axis according to a predetermined angular pitch, to prepare it for application of a new strip-like element 5. Sequential repetition of the above described operations causes formation of belt 2 made up of at least one layer having a circumferential extension around the geometric rotation axis of the tyre and formed of a plurality of strip-like elements 5 distributed in side by side relationship along the circumferential extension of the toroidal support 3.

It is further to be pointed out that for obtaining an improved laying of the strip-like element 5 and reducing overlapping between adjacent strip-like elements due to surface bending of the toroidal support 3, a relative angular rotation is carried out during application of each strip-like element 5, between the strip-like element itself and the toroidal support 3, around a correction axis that is substantially radial to the geometric rotation axis of the toroidal support, in a manner similar to that shown in Patent Application WO01/38077.

The tyre for motor-vehicles having a reinforcing structure obtainable by the process in accordance with the present invention has been generally identified by reference numeral 201.

In detail, the tyre 201 has a transverse section marked by a high transverse curvature: in more detail, said tyre 201 has a section height H measured in the equatorial plane between the centre of the tread band and the fitting diameter identified by the reference line r and passing through the tyre beads.

In addition, tyre 201 has a width C defined by the distance between the laterally opposite ends E of the tread itself, and a curvature defined by the particular value of the ratio between the distance f of the tread centre from the line passing through the extremities E of the tread itself, measured in the equatorial plane of the tyre and the width C.

The invention takes a particular importance when applied to tyres for two-wheeled vehicles having a section ratio H/C as high as or lower than 0.70 and generally also marked by a curvature ratio f/C higher than 0.15, although its extent and advantages also apply to tyres of other types, those for four-wheeled vehicles for example, whether they are cars or the so-called industrial vehicles.

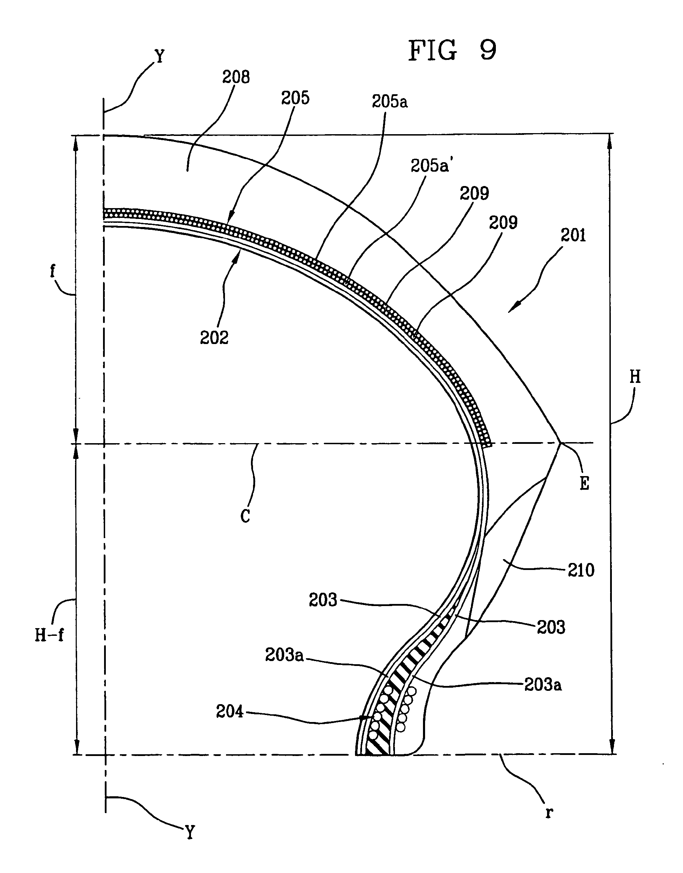

With reference to Figs. 9, tyre 201 comprises a carcass structure 202 having at least one carcass ply 203 of a substantially toroidal conformation and engaged, by its axially spaced apart circumferential edges, with a pair of annular anchoring structures 204 each of which, when tyre 201 is finished, is disposed in the region usually denoted as "bead".

The carcass ply 203 has two side portions 203a each extending radially away from one of the annular anchoring structures 204.

Applied to the carcass structure 202, at a circumferentially external position, is a belt structure 205 comprising at least two radially superposed layers 205a,205a'.

Each layer 205a,205a' consisting of elastomer material reinforced with threadlike reinforcing elements 209 disposed parallel to each other, said layers being arranged in such a manner that the threadlike reinforcing elements 209 of one belt layer 205a are obliquely oriented with respect to the equatorial plane of the tyre, whereas the threadlike reinforcing elements 209 of the other layer 205a' have an oblique orientation too but they are symmetrically crossed with respect to the cords of the first layer.

Preferably textile threadlike reinforcing elements are used, said threadlike reinforcing elements can be made of synthetic fibre, such as nylon, rayon, PEN, PET, preferably a high-modulus synthetic fibre, in particular aramidic fibre (Kevlar^{®} fibres, for example). Alternatively, hybrid threadlike reinforcing elements can be employed which comprise at least one low-module thread (a nylon or rayon thread, for example), intertwined with at least one high-modulus thread (Kevlar^{®}, for example).

Possible auxiliary belt layers can be disposed at a radially internal or outer position relative to the two belt layers 205a,205a'.

Circumferentially superposed on the belt structure 205 is a tread band 208 on which, following a moulding operation carried out concurrently with vulcanisation of the tyre, longitudinal and/or transverse grooves disposed to define a desired "tread pattern" can be formed.

Tyre 201 also comprises a pair of so-called "sidewalls" 210 laterally applied, on opposite sides, at an axially external position relative to the side portions 203a of the carcass ply 203.

## Claims

1. A process for producing tyres on a toroidal support, which tyres comprise a reinforcing structure comprising at least one layer having a circumferential extension around the geometric rotation axis of a toroidal support (3)comprising an outer surface (3a);
the at least one layer been formed of a plurality of strip-like elements (5) distributed in mutual side by side relationship along the circumferential extension of said toroidal support (3) according to a predetermined laying angle (α) relative to a circumferential extension direction of the toroidal support itself;
each strip-like element (5) comprising thread-like reinforcing elements at least partly coated with at least one layer of elastomeric material and been disposed parallel to each other and to a longitudinal direction of the same strip-like element (5);
the process comprising the following steps:
a) providing at least a strip-like element to be laid down on the toroidal support (3);
b) radially moving said strip like element towards the toroidal support (3) until it comes into contact with the outer surface (3a) of said toroidal support (3) enabling it to be pressed at its central portion close to the equatorial plane of said toroidal support (3);
c) exercising a pressure in a substantially continuous fashion over the whole width of the strip-like element along a tilted direction with respect to the longitudinal direction of the threadlike reinforcing element of the strip-like element;
d) pressing said strip-like element in opposite direction starting from the equatorial plane along the tilted direction substantially along all its longitudinal extension;
e) angularly rotating said toroidal support (3) around a geometric axis thereof according to a predetermined angular pitch, to make it ready for application of a new strip-like element (5):
f) sequentially repeating steps a) to e) to obtain the reinforcing structure.

2. A process as claimed in claim 1, wherein the tilted direction is the direction defined by the laying angle (α) relative to a circumferential extension direction of the toroidal support 3.

3. A process as claimed in claim 1, wherein the process further comprises:
bringing two first presser elements (14) in coupling relationship with two respective support element (12) to form two laying assemblies (9, 9') so as to retain a strip-like element (5).

4. A process as claimed in claim 1, wherein the provision of the strip-like element (5) is carried out by means of cutting actions sequentially executed on at least one continuous ribbon-like element (6) incorporating said thread-like reinforcing elements in said layer of elastomeric material.

5. A process as claimed in claim 4, wherein each cutting action is followed by the application onto the toroidal support (3) of the single strip-like element (5) thereby obtained.

6. A process as claimed in claim 1, wherein the individual strip-like elements (5) are sequentially positioned on the toroidal support (3) according to a circumferential distribution pitch corresponding to the width of the strip-like elements themselves, measured in correspondence with an equatorial plane of the toroidal support itself.

7. An apparatus for manufacturing a reinforcing structure for tyres of vehicles, the reinforcing structure comprising at least one layer to be formed by strip-like elements (5), each comprising threadlike reinforcing elements disposed parallel to each other and at least partly coated with at least one layer of elastomeric material, the apparatus comprising:
- a laying unit (100) comprising at least one laying assembly (9, 9') designed to apply each of said strip-like elements (5) onto a toroidal support (3), according to a predetermined laying angle (α) relative to a circumferential extension direction of the toroidal support itself;
- said laying assembly (9, 9') comprising at least one first presser element (14), movable in contrast relationship against the outer surface (3a) of the toroidal support (3)
**Characterised in that**:
said first presser element (14) comprises at least one tapered end (31) adapted to perform said contrast relationship and forming a tilted side (32) according to a tilt angle (β) correspondent to said predetermined laying angle (α) of the strip-like elements.

8. An apparatus as claimed in claim 7, wherein said tapered end (31) of the first presser element (14) is asymmetrically tapered.

9. An apparatus as claimed in claim 7, wherein said first presser element (14) is elastically flexible to follow the outer surface of the toroidal support during the laying down of the strips like elements.

10. An apparatus as claimed in claim 7, wherein each laying assembly (9,9') comprises at least one support element (12) designed to be coupled with the first presser element (14) in such a way to form a passage for the strip like element (5) to be laying down.

11. An apparatus as claimed in claim 7, wherein at least one laying assembly (9, 9') comprises at least one guide element (13) to guide the strip like element in a longitudinal direction thereof during the laying down.

12. An apparatus as claimed in claim 11 wherein said guide element (13) comprises two lateral shoulders reciprocally axially spaced apart and projecting from the presser element (14).

13. An apparatus as claimed in claim 11, wherein said guide element (13) comprises two lateral shoulders reciprocally axially spaced apart and projecting from the support element (12).

14. An apparatus as claimed in claim 7, wherein each laying assembly (9,9') further comprises at least an engaging device to couple said first presser element (13) and the support element (12) in a removable manner.

15. An apparatus as claimed in claim 14, wherein the engaging device comprises at least one prong (15) protruding from the support element (12) and adapted to be coupled in a correspondent seat (16) realised in the first presser element (14).

16. An apparatus as claimed in claim 14, wherein said at least one protruding prong (15) is tapered upwardly for center the strip like elements with respect to the first support element (14).

17. An apparatus as claimed in anyone of the preceding claims from 7 to 16, wherein each laying assembly (9, 9') further comprises at least one second presser element (10) to push said strip-like element (5) on the outer surface (3a) of said toroidal support (3) at the equatorial plane during the first instants of the laying down.

18. An apparatus as claimed in claim 17, wherein said laying assembly (9, 9') further comprises at least one spring element (26) acting to keep one end of at least one of said second presser element (10) in contrast relationship with the toroidal support (3), during laying of the strip-like element (5).

19. An apparatus as claimed in any one of preceding claims from 7 to 18, wherein the overall width of at least one first presser element (14) is greater than or equal to the width of the strip-like element (5) to be laid down.

20. An apparatus as claimed in any one of preceding claims from 7 to 19, wherein a laying unit (100) comprises two laying assembly (9, 9') arranged one in front to the other and movable in opposite direction to apply each of said strip-like elements (5).

## Patentansprüche

1. Verfahren zum Herstellen von Reifen auf einem ringförmigen Träger, wobei die Reifen eine Verstärkungsstruktur mit mindestens einer Schicht aufweisen, die eine Umfangserstreckung um die geometrische Drehachse eines ringförmigen Trägers (3) mit einer äußeren Fläche (3a) aufweist;
wobei die mindestens eine Schicht aus einer Vielzahl an streifenartigen Elementen (5) ausgebildet ist, die entlang der Umfangserstreckung des ringförmigen Trägers (3) in einem gegenseitigen Seite-an-Seite-Verhältnis gemäß einem vorgegebenen Verlegewinkel (α) relativ zu einer Umfangserstreckungsrichtung des ringförmigen Trägers selbst verteilt sind;
wobei jedes streifenartige Element (5) fadenartige Verstärkungselemente aufweist, die zumindest teilweise mit mindestens einer Schicht aus elastomerem Material beschichtet sind und parallel zueinander und zu einer Längsrichtung desselben streifenartigen Elements (5) angeordnet sind;
wobei das Verfahren die folgenden Schritte umfasst:
a) Bereitstellen mindestens eines streifenartigen Elements zum Ablegen auf den ringförmigen Träger (3);
b) radial Bewegen des streifenartigen Elements in Richtung des ringförmigen Trägers (3), bis es mit der äußeren Fläche (3a) des ringförmigen Trägers (3) in Kontakt gelangt, wobei ermöglicht wird, dass es bei seinem zentralen Abschnitt in der Nähe der Äquatorialebene des ringförmigen Trägers (3) gedrückt werden kann;
c) auf eine im Wesentlichen kontinuierliche Weise über die gesamte Breite des streifenartigen Elements Ausüben eines Drucks entlang einer in Bezug auf die Längsrichtung des fadenartigen Verstärkungselements des streifenartigen Elements geneigten Richtung;
d) ausgehend von der Äquatorialebene entlang der geneigten Richtung im Wesentlichen entlang seiner gesamten Längserstreckung Drücken des streifenartigen Elements in entgegengesetzter Richtung,;
e) winkelförmig Drehen des ringförmigen Trägers (3) um eine geometrische Achse desselben gemäß einem vorgegebenen Winkelabstand, um ihn für ein Aufbringen eines neuen streifenartigen Elements (5) bereitzumachen;
f) sequentielles Wiederholen von Schritten a) bis e) zur Erlangung der Verstärkungsstruktur.

2. Verfahren nach Anspruch 1, bei dem die geneigte Richtung die Richtung ist, die durch den Verlegewinkel (α) relativ zu einer Umfangserstreckungsrichtung des ringförmigen Trägers (3) definiert ist.

3. Verfahren nach Anspruch 1, wobei das Verfahren ferner umfasst:
in eine Kopplungsbeziehung Bringen von zwei ersten Andruckelementen (14) mit zwei jeweiligen Stützelementen (12) zum Bilden von zwei Verlegungsanordnungen (9, 9'), um so ein streifenartiges Element (5) zu sichern.

4. Verfahren nach Anspruch 1, bei dem das Bereitstellen des streifenartigen Elements (5) mittels Schneidevorgängen, die auf mindestens einem kontinuierlichen bandartigen Element (6) sequentiell durchgeführt werden, das die faserartigen Verstärkungselemente in der Schicht aus elastomerem Material einschließt.

5. Verfahren nach Anspruch 4, bei dem auf jeden Schneidevorgang das Aufbringen des dadurch gewonnen einzelnen streifenartigen Elements (5) auf den ringförmigen Träger (3) folgt.

6. Verfahren nach Anspruch 1, bei dem die individuellen streifenartigen Elemente (5) auf dem ringförmigen Träger (3) sequentiell positioniert werden, gemäß einem Umfangsverteilungsabstand, welcher der Breite der streifenartigen Elemente selbst entspricht, in Entsprechung mit einer Äquatorialebene des ringförmigen Trägers selbst gemessen.

7. Vorrichtung zum Herstellen einer Verstärkungsstruktur für Reifen von Fahrzeugen, wobei die Verstärkungsstruktur mindestens eine Schicht aufweist, die mittels streifenartiger Elemente (5) zu bilden ist, die jeweils faserartige Verstärkungselemente aufweisen, die parallel zueinander angeordnet sind und zumindest teilweise mit einer Schicht aus elastomerem Material beschichtet sind, wobei die Vorrichtung aufweist:
- eine Legeeinheit (100) mit mindestens einer Legeanordnung (9, 9'), die dazu ausgebildet ist, jedes der streifenartigen Elemente (5) auf einen ringförmigen Träger (3) aufzubringen, gemäß einem vorgegebenen Verlegewinkel (α) relativ zu einer Umfangserstreckungsrichtung des ringförmigen Trägers selbst;
- wobei die Legeanordnung (9, 9') mindestens ein erstes Andruckelement (14) aufweist, das in gegensätzlicher Beziehung gegenüber der äußeren Fläche (3a) des ringförmigen Trägers (3) bewegbar ist
**dadurch gekennzeichnet, dass**:
das erste Andruckelement (14) mindestens ein sich verjüngendes Ende (31) aufweist, das dazu ausgebildet ist, die gegensätzliche Beziehung auszuführen und eine geneigte Seite (32) gemäß einem Neigungswinkel (β) bildet, welcher dem vorgegebenen Verlegewinkel (α) der streifenartigen Elemente entspricht.

8. Vorrichtung nach Anspruch 7, bei welcher das sich verjüngende Ende (31) des ersten Andruckelements (14) asymmetrisch verjüngt ausgebildet ist.

9. Vorrichtung nach Anspruch 7, bei welcher das erste Andruckelement (14) zum Folgen der äußeren Fläche des ringförmigen Trägers während dem Ablegen der streifenartigen Elemente elastisch flexibel ausgebildet ist.

10. Vorrichtung nach Anspruch 7, bei der die Legeanordnung (9, 9') mindestens ein Stützelement (12) aufweist, das dazu ausgebildet ist, auf eine solche Weise mit dem ersten Andruckelement (14) gekoppelt zu werden, dass ein Durchgang für das abzulegende streifenartige Element (5) gebildet wird.

11. Vorrichtung nach Anspruch 7, bei der mindestens eine Legeanordnung (9, 9') mindestens ein Führungselement (13) zum während dem Ablegen Führen des streifenartigen Elements in einer Längsrichtung desselben aufweist.

12. Vorrichtung nach Anspruch 11, bei dem das Führungselement (13) zwei seitliche Schultern aufweist, die wechselseitig axial beabstandet sind und von dem Andruckelement (14) hervorstehen.

13. Vorrichtung nach Anspruch 11, bei dem das Führungselement (13) zwei seitliche Schultern aufweist, die wechselseitig axial beabstandet sind und von dem Stützelement (12) hervorstehen.

14. Vorrichtung nach Anspruch 7, bei der die Legeanordnung (9, 9') ferner mindestens eine Eingriffseinrichtung zum auf eine lösbare Weise Koppeln des ersten Andruckelements (13) und des Stützelements (12) aufweist.

15. Vorrichtung nach Anspruch 14, bei der die Eingriffseinrichtung mindestens einen Stift (15) aufweist, der von dem Stützelement (12) hervorsteht und dazu ausgebildet ist, mit einem korrespondierenden Sitz (16) gekoppelt zu werden, der in dem ersten Andruckelement (14) realisiert ist.

16. Vorrichtung nach Anspruch 14, bei welcher der mindestens eine hervorstehende Stift (15) nach oben verjüngt ausgebildet ist, zum Zentrieren der streifenartigen Elemente in Bezug auf das erste Stützelement (14).

17. Vorrichtung nach einem der Ansprüche 7 bis 16, bei welcher jede Legeanordnung (9, 9') ferner mindestens ein zweites Andruckelement (10) zum das streifenartige Element (5) während den ersten Augenblicken des Ablegens Drücken auf die äußeren Fläche (3a) des ringförmigen Trägers (3) bei der Äquatorialebene aufweist.

18. Vorrichtung nach Anspruch 17, bei welcher die Legeanordnung (9, 9') ferner mindestens ein Federelement (26) aufweist, das wirkt, um während dem Ablegen des streifenartigen Elements (5) mindestens eines des zweiten Andruckelements (10) in entgegengesetzter Beziehung mit dem ringförmigen Träger (3) zu halten.

19. Vorrichtung nach einem der Ansprüche 7 bis 18, bei welcher die Gesamtbreite von mindestens einem ersten Andruckelement (14) größer ist als oder identisch ist mit der Breite des abzulegenden streifenartigen Elements (5).

20. Vorrichtung nach einem der Ansprüche 7 bis 19, bei welcher eine Legeeinheit (100) mindestens zwei Legeanordnungen (9, 9') aufweist, die eine vor der anderen angeordnet sind und in entgegengesetzter Richtung bewegbar sind, um jedes der streifenartigen Elemente (5) aufzubringen.

## Revendications

1. Procédé pour fabriquer des pneus sur un support toroïdal, les pneus comprenant une structure de renfort comprenant au moins une couche présentant une étendue circonférentielle autour de l'axe de rotation géométrique d'un support toroïdal (3) comprenant une surface externe (3a) ;
l'au moins une couche étant formée d'une pluralité d'éléments (5) en forme de bande répartis côte à côte entre eux le long de l'étendue circonférentielle dudit support toroïdal (3) selon un angle de pose (α) prédéterminé par rapport à une direction d'étendue circonférentielle du support toroïdal (3) lui-même ;
chaque élément (5) en forme de bande comprenant des éléments de renfort filiformes au moins partiellement revêtus d'au moins une couche de matériau élastomère et étant disposés parallèlement les uns aux autres et à une direction longitudinale dudit élément (5) en forme de bande ;
le procédé comprenant les étapes suivantes :
a) se munir d'au moins un élément en forme de bande à appliquer sur le support toroïdal (3) ;
b) déplacer radialement ledit élément en forme de bande vers le support toroïdal (3) jusqu'à ce qu'il entre en contact avec la surface externe (3a) dudit support toroïdal (3), lui permettant d'être pressé au niveau de sa partie centrale à proximité du plan équatorial dudit support toroïdal (3) ;
c) exercer une pression de manière sensiblement continue sur toute la largeur de l'élément en forme de bande le long d'une direction inclinée par rapport à la direction longitudinale de l'élément de renfort filiforme de l'élément en forme de bande ;
d) presser ledit élément en forme de bande en direction opposée en partant du plan équatorial le long de la direction inclinée, sensiblement sur toute son étendue longitudinale ;
e) entraîner en rotation angulaire ledit support toroïdal (3) autour de son axe géométrique selon un pas angulaire prédéterminé, de sorte qu'il est prêt pour l'application d'un nouvel élément (5) en forme de bande ;
f) répéter séquentiellement les étapes a) à e) pour obtenir la structure de renfort.

2. Procédé selon la revendication 1, dans lequel la direction inclinée est la direction définie par l'angle de pose (α) par rapport à une direction d'étendue circonférentielle du support toroïdal (3).

3. Procédé selon la revendication 1, dans lequel le procédé comprend en outre :
amener deux premiers éléments presseurs (14) en relation de couplage avec deux éléments supports (12) respectifs pour former deux ensembles de pose (9, 9') afin de maintenir un élément (5) en forme de bande.

4. Procédé selon la revendication 1, dans lequel pour se munir de l'élément (5) en forme de bande on réalise des actions de coupe opérées séquentiellement sur au moins un élément continu (6) en forme de ruban incorporant lesdits éléments de renfort filiformes dans ladite couche de matériau élastomère.

5. Procédé selon la revendication 4, dans lequel chaque action de coupe est suivie par l'application sur le support toroïdal (3) de l'élément (5) individuel en forme de bande ainsi obtenu.

6. Procédé selon la revendication 1, dans lequel les éléments (5) individuels en forme de bande sont séquentiellement positionnés sur le support toroïdal (3) selon un pas de répartition circonférentielle qui correspond à la largeur des éléments en forme de bande eux-mêmes, mesurée en correspondance avec un plan équatorial du support toroïdal lui-même.

7. Dispositif pour fabriquer une structure de renfort pour des pneus de véhicules, la structure de renfort comprenant au moins une couche devant être formée d'éléments (5) en forme de bande comprenant chacun des éléments de renfort filiformes disposés parallèlement les uns aux autres et au moins partiellement revêtus d'au moins une couche de matériau élastomère, le dispositif comprenant :
- une unité de pose (100) comprenant au moins un ensemble de pose (9, 9') agencé pour appliquer chacun desdits éléments (5) en forme de bande sur un support toroïdal (3), selon un angle de pose (α) prédéterminé par rapport à une direction d'étendue circonférentielle du support toroïdal lui-même ;
- ledit ensemble de pose (9, 9') comprenant au moins un premier élément presseur (14), pouvant être amené en relation d'opposition contre la surface externe (3a) du support toroïdal (3) ;
**caractérisé en ce que** :
ledit premier élément presseur (14) comprend au moins une extrémité effilée (31) adaptée pour réaliser ladite relation d'opposition et formant une face inclinée (32) selon un angle d'inclinaison (β) correspondant audit angle de pose (α) prédéterminé des éléments en forme de bande.

8. Dispositif selon la revendication 7, dans lequel ladite extrémité effilée (31) du premier élément presseur (14) est effilée de manière asymétrique.

9. Dispositif selon la revendication 7, dans lequel ledit premier élément presseur (14) est flexible élastiquement pour suivre la surface externe du support toroïdal lors de l'application des éléments en forme de bande.

10. Dispositif selon la revendication 7, dans lequel chaque ensemble de pose (9, 9') comprend au moins un élément support (12) agencé pour être couplé au premier élément presseur (14) de sorte à former un passage pour l'élément (5) en forme de bande à appliquer.

11. Dispositif selon la revendication 7, dans lequel au moins un ensemble de pose (9, 9') comprend au moins un élément de guidage (13) pour guider l'élément en forme de bande selon sa direction longitudinale lors de l'application.

12. Dispositif selon la revendication 11, dans lequel ledit élément de guidage (13) comprend deux épaulements latéraux espacés axialement l'un de l'autre et faisant saillie depuis l'élément presseur (14).

13. Dispositif selon la revendication 11, dans lequel ledit élément de guidage (13) comprend deux épaulements latéraux espacés axialement l'un de l'autre et faisant saillie depuis l'élément support (12).

14. Dispositif selon la revendication 7, dans lequel chaque ensemble de pose (9, 9') comprend en outre au moins un dispositif d'accouplement pour coupler ledit premier élément presseur (14) et l'élément support (12) de manière amovible.

15. Dispositif selon la revendication 14, dans lequel le dispositif d'accouplement comprend au moins une dent (15) faisant saillie depuis l'élément support (12) et agencée pour être couplée dans un emplacement correspondant (16) réalisé sur le premier élément presseur (14).

16. Dispositif selon la revendication 14, dans lequel ladite au moins une dent (15) faisant saillie est effilée vers le haut de manière à centrer les éléments en forme de bande par rapport au premier élément support (14).

17. Dispositif selon l'une quelconque des revendications 7 à 16, dans lequel chaque ensemble de pose (9, 9') comprend en outre au moins un deuxième élément presseur (10) pour presser ledit élément (5) en forme de bande sur la surface externe (3a) dudit support toroïdal (3) au niveau du plan équatorial lors des premiers instants de l'application.

18. Dispositif selon la revendication 17, dans lequel ledit ensemble de pose (9, 9') comprend en outre au moins un élément ressort (26) agissant pour maintenir une extrémité d'au moins un deuxième élément presseur (10) en relation d'opposition avec le support toroïdal (3), lors de l'application de l'élément (5) en forme de bande.

19. Dispositif selon l'une quelconque des revendications 7 à 18, dans lequel la largeur globale d'au moins un premier élément presseur (14) est supérieure ou égale à la largeur de l'élément (5) en forme de bande à appliquer.

20. Dispositif selon l'une quelconque des revendications 7 à 19, dans lequel une unité de pose (100) comprend deux ensembles de pose (9, 9') agencés face à face et susceptibles d'être déplacés en sens contraires pour appliquer chacun desdits éléments (5) en forme de bande.
